# FASCICULE DE BREVET EUROPEEN

(11) **EP 0 851 327 B1**
(45) Date de publication et mention de la délivrance du brevet: **24.07.2002**
(21) Numéro de dépôt: 97410148.7
(22) Date de dépôt: 19.12.1997
(51) Int. Cl.: G05B 19/042

(54) **Appareil électrique comportant une entrée de commande**
Elektrisches Gerät mit Steuerungseingabe
Electrical apparatus with a control input

(30) Priorité: 23.12.1996 FR 9616153; 10.02.1997 FR 9701696
(43) Date de publication de la demande: 01.07.1998
(73) Titulaire: Schneider Electric Industries SA, 92500 Rueil-Malmaison (FR)
(72) Inventeur: Basset, Eric, 38050 Grenoble cedex 09 (FR)
(74) Mandataire: Jouvray, Marie-Andrée

(56) Documents cités:
- EP-A- 0 137 620
- EP-A- 0 367 692
- WO-A-92/17830
- DE-A- 19 512 372
- US-A- 4 473 803
- US-A- 5 227 670

## Description

L'invention concerne un appareil électrique comportant des moyens de traitement et une entrée de commande reliée audits moyens de traitement.

Des appareils électriques connus, tels que des minuteries électriques ou des télérupteurs, comportent une entrée de commande connectée à des boutons poussoirs lumineux. Ces boutons poussoirs présentent l'avantage de pouvoir commander les appareils depuis de multiples endroits. Pour cela, ils sont connectés en parallèle et comportent chacun un voyant. Ce voyant est généralement une petite ampoule au néon.

Ces boutons poussoirs lumineux sont bien adaptés pour la commande d'appareils électromagnétiques comportant un composant électromagnétique à commande impulsionnelle. Cependant, lorsque les appareils ont des circuits d'entrée électroniques, la commande par des boutons poussoirs reliés à des lignes d'un réseau de distribution nécessite des circuits d'atténuation de tension.

En effet, les circuits électroniques ont généralement une impédance d'entrée élevée et doivent être commandés par une très basse tension.

Si les boutons poussoirs de commande connectés en parallèle sont nombreux, les voyants associés audits boutons poussoirs et connectés également en parallèle imposent un courant de fuite très important. Pour éviter que le courant des voyants commande l'entrée de l'appareil électrique, il est connu de diminuer l'impédance d'entrée des circuits électroniques. Une façon simple de diminuer l'impédance consiste à connecter sur l'entrée une résistance de faible valeur. Cependant, cette résistance doit pouvoir supporter une tension élevée et dissiper une forte puissance lorsqu'un bouton poussoir est activé. Une telle résistance de forte puissance a nécessairement un volume important incompatible avec des circuits électroniques miniaturisés.

Une demande de brevet WO92/17830 décrit une unité d'interface analogique comportant un dispositif d'adaptation. Cependant, un tel dispositif ne permet pas de réduire efficacement la puissance des composants utilisés.

L'invention a pour but un appareillage électrique ayant un circuit électronique d'entrée ne nécessitant pas de composant de forte puissance.

Selon l'invention, l'appareil électrique comporte des moyens de traitement, une entrée de commande reliée audits moyens de traitement, et des moyens d'adaptation connectés entre l'entrée de commande et les moyens de traitement,
lesdits moyens d'adaptation comportant des moyens pour augmenter l'impédance d'entrée de l'entrée de commande lorsqu'un courant circulant dans ladite entrée dépasse un seuil prédéterminé et des moyens de mémorisation reliés à des moyens de commutation pour contrôler le changement d'impédance de l'entrée de commande.

Dans un mode particulier de réalisation, les moyens d'adaptation comportent des moyens de mesure de courant reliés à l'entrée de commande et des moyens de comparaison, connectés audits moyens de mémorisation, pour comparer la valeur de courant mesuré à un seuil et commander un changement d'impédance de l'entrée de commande en fonction du résultat de la comparaison.

Selon un second développement du mode particulier de réalisation, les moyens de commutation sont reliés audits moyens de comparaison ou audits moyens de mémorisation et à une entrée de commande.

Dans un premier mode de réalisation préférentiel, les moyens d'adaptation comportent une première résistance de faible valeur et une seconde résistance de forte valeur connectées aux moyens de commutation, les première et seconde résistances coopérant avec les moyens de commutation pour modifier l'impédance d'entrée du circuit d'adaptation.

Dans un second mode de réalisation préférentiel, le circuit d'adaptation comporte un premier transistor connecté en série avec une première résistance entre deux entrées, et un second transistor connecté au premier transistor, à la première résistance et à une sortie, le premier transistor ayant une fonction de commutateur, le second transistor ayant une fonction de comparateur, et un ensemble constitué par le premier et le second transistors ayant une fonction de mémoire.

Les moyens de traitement sont, notamment, des circuits de minuterie électrique, des circuits de télérupteur, des circuits d'un automatisme.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- La figure 1 représente un schéma d'installation d'un appareil électrique de type connu commandé par des boutons poussoirs lumineux.
- La figure 2 représente un schéma d'un appareil électrique selon un mode de réalisation de l'invention.
- La figure 3 représente un schéma bloc d'un circuit d'adaptation mis en oeuvre dans un appareillage selon l'invention.
- La figure 4 représente un mode de réalisation particulier d'un circuit d'adaptation selon la figure 2.

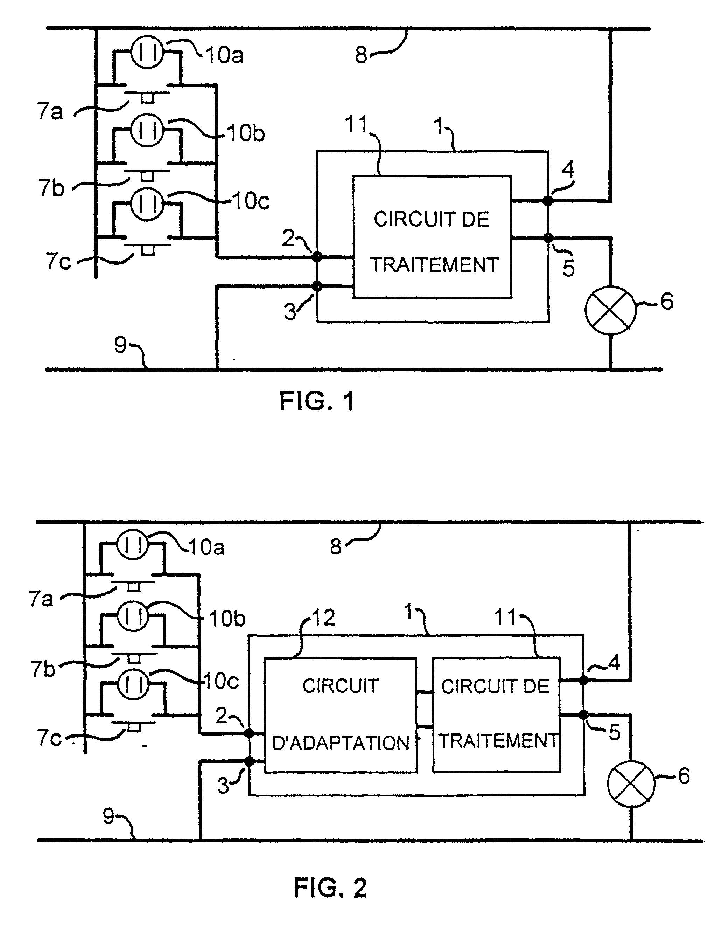

Sur le schéma d'installation de la figure 1, un appareil électrique 1 comporte des entrées 2 et 3 pour recevoir des signaux de commande électrique et des sorties 4 et 5 pour contrôler l'alimentation électrique d'une charge 6. L'appareil 1 est par exemple une minuterie électrique ou un télérupteur.

Une première entrée 2 de l'appareil 1 est connectée à des boutons poussoirs 7a, 7b, 7c reliés en parallèle. Chaque bouton poussoir est connecté entre une première ligne 8 d'un réseau électrique, par exemple une phase, et une première entrée 2 de l'appareil 1. Une seconde entrée 3 de l'appareil 1 est connectée à une seconde ligne 9 du réseau électrique, par exemple le neutre.

La première ligne 8 est connectée à une première sortie 4 et la charge 6 est connectée entre une seconde sortie 5 et la seconde ligne 9. Si l'appareil est une minuterie, un contact est fermé entre les sorties 4 et 5 pendant un temps prédéterminé, lorsqu'un bouton poussoir à été actionné.

Pour localiser les boutons poussoirs pendant des périodes non éclairées, lesdits boutons poussoirs comportent des voyants 10a, 10b, 10c connectés en parallèle sur des contacts. Ces voyants sont généralement des lampes au néon qui génèrent des courants de fuite entre la première ligne 8 et la première entrée 2.

Le courant de fuite étant proportionnel au nombre de voyants, lorsque le nombre de boutons poussoirs est élevé le courant de fuite devient lui aussi très élevé. Pour ne pas commander en permanence l'entrée 2, il est nécessaire d'avoir une impédance basse entre les entrées 2 et 3. Avec des appareils électromagnétiques, l'impédance d'entrée est basse et le courant de fuite ne commande pas l'appareil.

Si l'appareil 1 comporte un circuit 11 de traitement électronique, l'impédance d'entrée est élevée. Dans ce cas, le courant de fuite risque de commander l'appareil 1 en permanence. Il est possible de baisser l'impédance d'entrée en mettant en permanence une résistance de faible valeur connectée entre les entrées 2 et 3, mais cette résistance dissiperait une puissance importante à chaque commande par un bouton poussoir. Une telle résistance de forte puissance serait volumineuse et par conséquent incompatible avec des circuits électroniques de faible dimension.

La figure 2 montre un schéma bloc d'un appareillage selon un mode de réalisation de l'invention. Dans ce mode de réalisation, l'appareil 1 comporte un dispositif d'adaptation 12 connecté entre les bornes d'entrée et le circuit 11 de traitement.

Le dispositif d'adaptation 12 a une impédance d'entrée qui varie en fonction du courant de commande circulant entre les bornes 2 et 3. Ainsi, lorsque les boutons poussoirs ne sont pas actionnés, les voyants ont un courant de fuite qui traverse le dispositif d'adaptation 12 en état de basse impédance d'entrée. Dans ce cas, le dispositif 12 fournit au circuit 11 un signal représentatif de l'état ouvert des boutons poussoirs.

Dès qu'un bouton poussoir est activé, un courant important traverse le dispositif 12 qui augmente alors automatiquement son impédance d'entrée pour limiter le courant et la puissance dissipée.

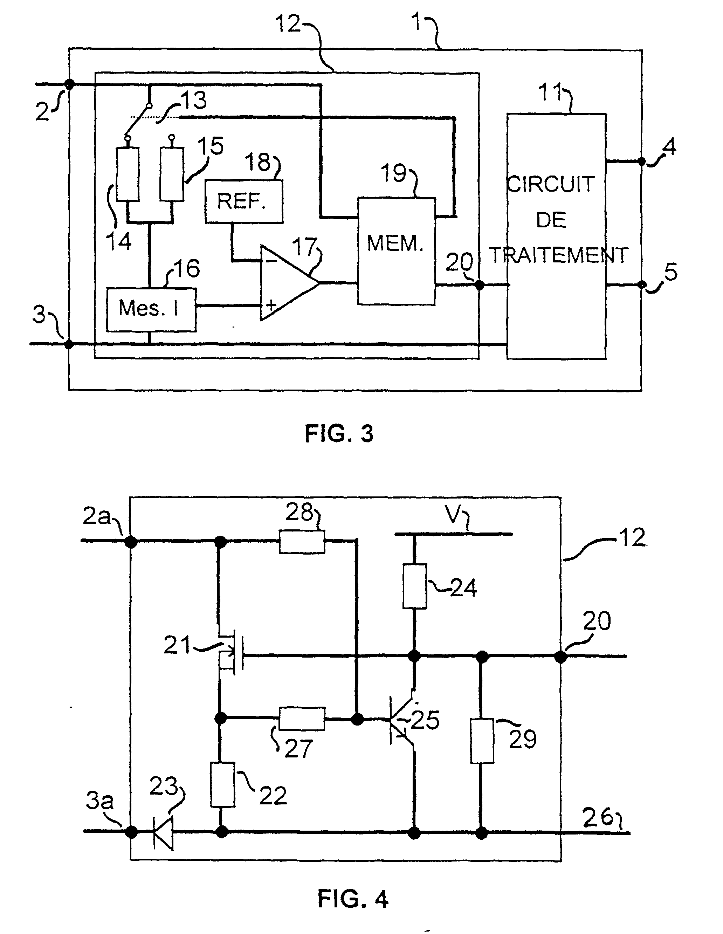

Le dispositif 12 de la figure 3 comporte un commutateur 13 à deux positions dont un point commun est connecté à l'entrée 2, un premier contact connecté à une première résistance 14 de faible valeur, et un second contact connecté à une seconde résistance 15 de forte valeur. Un circuit de mesure de courant 16 est connecté entre les résistances 14, 15 et l'entrée 3.

Le circuit 16 a une sortie connectée à une première entrée d'un comparateur et une seconde entrée dudit comparateur est connectée à une référence 18. Une sortie du comparateur 17 est connectée à une première entrée d'un circuit de mémorisation 19. Le circuit de mémorisation comporte aussi une seconde entrée connectée à l'entrée 2, une première sortie reliée au commutateur 13 pour commander la position des contacts, et une seconde sortie 20 connectée au circuit de traitement 11 pour fournir un signal représentatif de l'état des boutons poussoirs.

Tant que tous les boutons poussoirs sont ouverts, le commutateur est dans une première position. Le courant de fuite des voyants entre par l'entrée 2, traverse le commutateur 13, la première résistance 14 de faible valeur, le circuit de mesure 16 et sort par l'entrée 3. Le circuit de mesure envoie au comparateur 17 un signal représentatif du courant de fuite. La référence 18 étant déterminée de manière à être supérieure au courant de fuite maximal acceptable et inférieure au courant des boutons poussoirs lorsque ceux-ci sont activés, la sortie du comparateur est à l'état bas et ne commande pas le circuit 19 de mémorisation. La première sortie du circuit 19 fournit un signal représentatif de boutons poussoirs désactivés.

Si un bouton poussoir est activé, le courant passe au début par le commutateur 13, la résistance 14 et le circuit 16. Le signal, envoyé au comparateur, est alors très élevé et dépasse le seuil fourni par la référence 18. La sortie du comparateur commande le circuit de mémorisation qui fournit au circuit 11 un signal représentatif de bouton poussoir actionné et commande par sa seconde sortie le commutateur 13.

Le commutateur 13 passe alors dans une seconde position et le courant des boutons poussoirs circule dans la résistance 15 de forte valeur et dans le circuit de mesure 16. Le courant est dans ce cas limité par la résistance 15 de forte valeur.

Lorsque le bouton poussoir n'est plus actionné, la tension entre les entrées 2 et 3 diminue puisque le courant des boutons poussoirs devient égal au courant de fuite. Cette variation de tension est appliquée sur la seconde entrée du circuit 19 pour le réinitialiser.

En particulier, cette réinitialisation intervient au passage à zéro de la tension alternative du réseau de distribution entre les lignes 8 et 9.

Le circuit 19 remet le commutateur 13 dans sa première position et fournit une information au circuit 11, représentative de boutons poussoirs désactivés. Le courant de fuite des boutons poussoirs repasse alors par la résistance 14 et le circuit 16. Le courant étant inférieur au seuil de référence, la sortie du comparateur est à l'état bas.

La figure 4 montre un autre mode de réalisation détaillé d'un circuit d'adaptation 12 pouvant être mis en oeuvre dans un appareil selon l'invention. Dans ce schéma, les entrées 2a et 3a sont équivalentes aux entrées de l'appareil 1, respectivement 2 et 3. Le circuit 12 comporte un transistor à effet de champs (MOS) ayant son drain relié à l'entrée 2a, sa source reliée à l'entrée 3a à travers une résistance 22 de mesure de courant et une diode 23 en série, et sa grille reliée à la sortie 20 et polarisée à travers une résistance 24 par une tension V. Un transistor 25 faisant office de comparateur a son émetteur connecté à une ligne commune de référence 26, sa base connectée à la source du transistor 21 à travers une résistance 27 et à la borne 2a à travers une résistance 28, et son collecteur connecté à la grille du transistor 21. La ligne de référence est également connectée à un point commun de la résistance 22 et de la diode 23. Une résistance 29 connectée entre la sortie 20 et la ligne de référence 26 permet de déterminer la tension maximale de sortie du circuit 12.

Tant que les boutons poussoirs ne sont pas actionnés, le courant de fuite traverse le transistor 21 entre drain et source, la résistance 22 et la diode 23. La tension sur la résistance 22 étant faible, le transistor 25 est bloqué et la sortie 20 a une tension qui dépend de la valeur des résistances 24 et 29. Cette tension informe le circuit de traitement que les boutons poussoirs ne sont pas actionnés.

Dès qu'un bouton poussoir est actionné, le courant passe par le transistor 21 et la résistance de faible valeur 22. La tension dans ladite résistance 22 augmente et provoque la conduction du transistor 25. La tension de la sortie 20 diminue ainsi que la tension de la grille du transistor 21 qui devient bloqué. Le transistor 25 est alors saturé est reste conducteur tant qu'au moins un bouton poussoir reste actionné. Le courant des boutons poussoirs circule par la résistance 28 de forte valeur et par la base du transistor 25 ainsi que par les résistances 27 et 28 en série.

Si les boutons poussoirs ne sont plus actionnés, le courant circulant dans la résistance 28 devient faible et circule de préférence par les résistances 27 et 22. Le transistor 25 n'est plus commandé, la tension de la sortie 20 augmente, et le transistor 21 conduit pour faire passer le courant de fuite des voyants par la résistance 22 de faible valeur.

Le réseau de distribution étant généralement en courant alternatif, un cycle de fonctionnement commence à chaque passage à zéro de la tension dudit réseau. Notamment au passage à zéro de la tension du réseau de distribution, si les boutons poussoirs ne sont plus actionnés, le courant de fuite des voyants traverse de nouveau le transistor 21 et la résistance 22. La présence de la diode 23 bloquant une alternance du courant alternatif, le passage à zéro du courant entre les entrées 2a et 3a peut durer une demi-période de la tension alternative du réseau.

Dans ce schéma, la résistance de faible valeur est la résistance 22, la résistance de forte valeur est la résistance 28, la mesure du courant et la comparaison est effectuée par le transistor 25, la commutation des résistances est réalisée par le transistor 21 et la fonction de mémorisation est réalisée par le montage des deux transistors 21 et 25.

Si la tension de réseaux en courant alternatif est de 230 V, les résistances de faibles valeurs sont de préférence comprises entre 1 ohm et 10 ohms, et les résistances de fortes valeurs sont de préférence comprises entre 30000 ohms et 400000 ohms.

Pour des réseaux à courant alternatif, la diode 23 interrompt le fonctionnement du circuit 12 pendant une demi-période de chaque période. Dans ce cas, le circuit de traitement 11 tient compte du fonctionnement intermittent du circuit d'adaptation.

Dans les modes de réalisation décrits ci-dessus, les circuits 11 et 12 sont représentés de manière séparée, mais il est évident qu'ils peuvent être intégrés sur un même circuit électronique.

Les appareils électriques concernés par l'invention sont de préférence les minuteries, les télérupteurs et les automatismes.

## Revendications

1. Appareil électrique comportant des moyens (11) de traitement, une entrée de commande (2, 3) reliée audits moyens de traitement, et des moyens d'adaptation (12) connectés entre l'entrée de commande et les moyens de traitement
**caractérisé** en ce lesdits moyens d'adaptation comportent des moyens (13, 14, 15, 21, 22, 28) pour augmenter l'impédance d'entrée de l'entrée de commande lorsqu'un courant circulant dans ladite entrée (2, 3) dépasse un seuil prédéterminé (18), et des moyens de mémorisation (19, 21, 25) reliés à des moyens de commutation (13, 21) pour contrôler le changement d'impédance (14, 15, 22, 27, 28) de l'entrée de commande.

2. Appareil électrique selon la revendication 1, **caractérisé en ce que** les moyens d'adaptation (12) comportent des moyens de mesure de courant (16, 22, 27, 25) reliés à l'entrée de commande et des moyens de comparaison (17, 25), connectés audits moyens de mémorisation, pour comparer la valeur de courant mesuré à un seuil (18) et commander un changement d'impédance de l'entrée de commande en fonction du résultat de la comparaison.

3. Appareil électrique selon la revendication 2 **caractérisé en ce que** les moyens de commutation (13, 21) sont reliés audits moyens de comparaison ou audits moyens de mémorisation et à une entrée de commande (2, 3, 2a, 3a).

4. Appareil électrique selon l'une quelconque des revendications 1 à 3, **caractérisé en ce que** les moyens d'adaptation comportent une première résistance de faible valeur et une seconde résistance de forte valeur connectées aux moyens de commutation, les première et seconde résistances coopérant avec les moyens de commutation pour modifier l'impédance d'entrée du circuit d'adaptation.

5. Appareil électrique selon l'une quelconque des revendications 1 à 4, **caractérisé en ce que** le circuit d'adaptation comporte un premier transistor (21) connecté en série avec une première résistance (22) entre deux entrées (2a, 3a, 2, 3), et un second transistor (25) connecté au premier transistor (21), à la première résistance (22) et à une sortie (20), le premier transistor ayant une fonction de commutateur, le second transistor ayant une fonction de comparateur, et un ensemble constitué par le premier et le second transistors ayant une fonction de mémoire.

6. Appareil électrique selon l'une quelconque des revendications 1 à 5, **caractérisé en ce que** les moyens de traitement sont des circuits de minuterie électrique.

7. Appareil électrique selon l'une quelconque des revendications 1 à 5, **caractérisé en ce que** les moyens de traitement sont des circuits de télérupteur.

8. Appareil électrique selon l'une quelconque des revendications 1 à 5, **caractérisé en ce que** les moyens de traitement sont des circuits d'un automatisme.

## Patentansprüche

1. Elektrisches Schaltgerät mit Verarbeitungsmitteln (11), einem mit den genannten Verarbeitungsmitteln verbundenen Steuereingang (2, 3) sowie zwischen den Steuereingang und die Verarbeitungsmittel geschalteten Anpaßmitteln (12),
**dadurch gekennzeichnet, daß** die genannten Anpaßmittel Mittel (13, 14, 15, 21, 22, 28) umfassen, die dazu dienen, den Eingangswiderstand des Steuereingangs zu erhöhen, wenn ein über den genannten Eingang (2, 3) fließender Strom einen festgelegten Schwellwert (18) überschreitet, sowie mit Umschaltmitteln (13, 21) verbundene Speichermittel (19, 21, 25) umfassen, die dazu dienen, die Änderung des Eingangswiderstands (14, 15, 22, 27, 28) des Steuereingangs zu veranlassen.

2. Elektrisches Schaltgerät nach Anspruch 1, **dadurch gekennzeichnet, daß** die Anpaßmittel (12) Strommeßmittel (16, 22, 27, 25) umfassen, die an den Steuereingang sowie an mit den Speichermitteln verbundene Vergleichsmittel (17, 25) angeschlossen sind, um den Wert des gemessenen Stroms mit einem Schwellwert (18) zu vergleichen und in Abhängigkeit vom Ergebnis des Vergleichs eine Änderung des Eingangswiderstands des Steuereingangs zu veranlassen.

3. Elektrisches Schaltgerät nach Anspruch 2, **dadurch gekennzeichnet, daß** die Umschaltmittel (13, 21) mit den genannten Vergleichsmitteln oder mit den genannten Speichermitteln und einem Steuereingang (2, 3, 2a, 3a) verbunden sind.

4. Elektrisches Schaltgerät nach irgendeinem der Ansprüche 1 bis 3, **dadurch gekennzeichnet, daß** die Anpaßmittel einen ersten Widerstand mit kleinem Widerstandswert sowie einen zweiten Widerstand mit hohem Widerstandswert umfassen, die mit den Umschaltmitteln verbunden sind, wobei der erste und der zweite Widerstand jeweils mit den Umschaltmitteln zusammenwirkt, um den Eingangswiderstand der Anpaßschaltung zu verändern.

5. Elektrisches Schaltgerät nach irgendeinem der Ansprüche 1 bis 4, **dadurch gekennzeichnet, daß** die Anpaßschaltung einen zwischen zwei Eingängen (2a, 3a, 2, 3) mit einem ersten Widerstand (22) in Reihe geschalteten ersten Transistor (21) sowie einen mit dem ersten Transistor (21), dem ersten Widerstand (22) und einem Ausgang (20) verbundenen zweiten Transistor (25) umfaßt, wobei der erste Transistor eine Umschaltfunktion, der zweite Transistor eine Vergleichsfunktion und eine aus dem ersten und dem zweiten Transistor bestehende Schaltung eine Speicherfunktion aufweisen.

6. Elektrisches Schaltgerät nach irgendeinem der Ansprüche 1 bis 5, **dadurch gekennzeichnet, daß** die Verarbeitungsmittel als elektrische Zeitschaltungen ausgebildet sind.

7. Elektrisches Schaltgerät nach irgendeinem der Ansprüche 1 bis 5, **dadurch gekennzeichnet, daß** die Verarbeitungsmittel als Stromstoßschaltungen ausgebildet sind.

8. Elektrisches Schaltgerät nach irgendeinem der Ansprüche 1 bis 5, **dadurch gekennzeichnet, daß** die Verarbeitungsmittel als Schaltungen einer Steuerung ausgebildet sind.

## Claims

1. An electrical apparatus comprising processing means (11), a control input (2, 3) connected to said processing means, and matching means (12) connected between the control input and the processing means
**characterized in that** said matching means comprise means (13, 14, 15, 21, 22, 28) for increasing the input impedance of the control input when a current flowing in said input (2, 3) exceeds a preset threshold (18), and storage means (19, 21, 25) connected to switching means (13, 21) to check the impedance change (14, 15, 22, 27, 28) of the control input.

2. The electrical apparatus according to claim 1, **characterized in that** the matching means (12) comprise current measuring means (16, 22, 27, 25) connected to the control input and comparison means (17, 25) connected to said storage means to compare the measured current value to a threshold (18) and command an impedance change of the control input according to the result of the comparison..

3. The electrical apparatus according to claim 1, **characterized in that** the switching means (13, 21) are connected to said comparison means or to said storage means and to a control input (2, 3, 2a, 3a).

4. The electrical apparatus according to any one of the claims 1 to 3, **characterized in that** the matching means comprise a first resistor of low value and a second resistor of high value connected to the switching means, the first and second resistors co-operating with the switching means to modify the input impedance of the matching circuit.

5. The electrical apparatus according to any one of the claims 1 to 4, **characterized in that** the matching circuit comprises a first transistor (21) connected in series with a first resistor (22) between two inputs (2a, 3a, 2, 3), and a second transistor (25) connected to the first transistor (21), to the first resistor (22) and to an output (20), the first transistor having a switch function, the second transistor having a comparator function, and an assembly formed by the first and second transistors having a memory function.

6. The electrical apparatus according to any one of the claims 1 to 5, **characterized in that** the processing means are electrical timer circuits.

7. The electrical apparatus according to any one of the claims 1 to 5, **characterized in that** the processing means are remote-controlled switch circuits.

8. The electrical apparatus according to any one of the claims 1 to 5, **characterized in that** the processing means are automatic controller circuits.
